# EUROPÄISCHE PATENTANMELDUNG

(11) **EP 2 584 231 A2**
(43) Veröffentlichungstag der Anmeldung: **24.04.2013**
(21) Anmeldenummer: 12188155.1
(22) Anmeldetag: 11.10.2012
(51) Int. Cl.: F16K 11/074

(54) **Ventilkartusche für eine Sanitärarmatur**

(30) Priorität: 20.10.2011 DE 102011084837
(71) Anmelder: Hansgrohe SE, 77761 Schiltach (DE)
(72) Erfinder: Groß, Jürgen, 77796 Mühlenbach (DE); King, Jürgen, 78730 Lauterbach (DE)
(74) Vertreter: Patentanwälte Ruff, Wilhelm, Beier, Dauster & Partner

(57) **Zusammenfassung**

Eine Ventilkartusche für eine Sanitärarmatur enthält ein Kartuschengehäuse mit einer Scheibensteuerung. Zur Betätigung der Scheibensteuerung dient ein verdrehbares Betätigungselement. Die Scheibensteuerung ist so ausgebildet, dass sie von einer Position, in der das Ventil geschlossen ist, durch Drehen des Betätigungselements zunächst zur zunehmenden Öffnung der Wasserführung für kaltes Wasser gebracht wird. Bei Weiterdrehen des Betätigungselements wird die Wasserführung des warmen Wassers geöffnet und im gleichen Maße die Wasserführung für kaltes Wasser geschlossen, bis in einer Endpositionen nur die Öffnung für warmes Wasser geöffnet ist.

Durch Anbringen eines abnehmbaren Anschlagelements (11), das mit einem Querbolzen (8) des Betätigungselements zusammenwirkt, lässt sich der Verstellbereich an einem Ende so einschränken, dass die Scheibensteuerung die geschlossene Position nicht mehr erreichen kann, sondern nur zwischen der maximalen Öffnungsstellung für das kalte Wasser und der maximalen Öffnungsstellung für das Warmwasser verstellt werden kann.

## Beschreibung

Die Erfindung geht aus von einer Ventilkartusche für eine Sanitärarmatur.

Seit langem sind Sanitärarmaturen mit Ventilkartuschen bekannt, bei denen durch Betätigen eines Betätigungselements aus einer ersten Stellung zunächst der Durchfluss für kaltes Wasser allmählich geöffnet und bei weiterer Bewegung des Betätigungselements in der gleichen Richtung anschließend der Durchfluss für kaltes Wasser geschlossen und der für warmes Wasser geöffnet wird, so dass bei dieser Bewegung das Mischungsverhältnis zwischen kaltem und warmen Wasser sich kontinuierlich von kalt auf warm ändert. Am Ende der Bewegung ist dann ausschließlich der Durchfluss für warmes Wasser geöffnet. Ventilkartuschen dieser Art haben den Vorteil, dass sichergestellt ist, dass beim Öffnen des Ventils immer zunächst kaltes Wasser kommt.

Ventile dieser Art dienen sowohl zum Öffnen und Schließen der Sanitärarmatur als auch zum Einstellen des Mischungsverhältnisses und damit der Temperatur des ausströmenden Wassers.

Ebenfalls bekannt sind Rotationskartuschen, die keine geschlossene Stellung aufweisen und nur zur Einstellung des Mischungsverhältnisses dienen.

Die Art der Verstellung der Öffnungsquerschnitte innerhalb der Kartusche kann unterschiedlich gestaltet sein. Es gibt Mischeinrichtungen mit Hubkolben oder Drehkolben, von denen jeder nur einen Wasserzulauf steuert, die aber beispielsweise mit einem gemeinsamen Betätigungselement miteinander verbunden sind.

Die weiteste Verbreitung haben jedoch so genannte Scheibensteuerungen, bei denen eine feststehende so genannte Verteilerscheibe aus Keramik die Einlassöffnungen und gegebenenfalls auch die Auslassöffnung für das Mischwasser enthält, während eine bewegbare Steuerscheibe mit eigenen Öffnungen die Einlassöffnungen in unterschiedliche Überdeckungen bringt, so dass die Querschnitte sich jeweils ändern. Das Mischwasser kann entweder durch die bewegliche Steuerscheibe hindurch zum Auslass aus der Ventilkartusche gelangen, oder innerhalb der bewegbaren Steuerscheibe umgelenkt werden und durch eine Auslassöffnung der Verteilerscheibe hindurch gelangen.

Ebenfalls bekannt sind derartige Steuerungen, insbesondere auch Scheibensteuerungen, mit deren Hilfe nur die Temperatur durch Änderung des Mischungsverhältnisses zwischen warmen und kalten Wasser gesteuert wird, während zum Steuern der Menge des abgegebenen Mischwassers ein zweites Ventil dient.

Beide Arten von Steuerungen können in Ventilkartuschen verwirklicht werden, indem man die Steuerscheiben durch andere Steuerscheiben mit entsprechend anders geformten Öffnungen ersetzt.

Bei einer bekannten Sicherheitsmischbatterie für Niederdruckspeicher wird eine Scheibensteuerung verwendet, und die Betätigung ist eine Verdrehung der bewegbaren Steuerscheibe mithilfe eines Drehgriffs (DE 2912909 A1).

Der Erfindung liegt die Aufgabe zu Grunde, eine vielseitiger verwendbare Mischerkartusche für eine Sanitärarmatur zu schaffen.

Zur Lösung dieser Aufgabe schlägt die Erfindung eine Mischerkartusche mit den im Anspruch 1 genannten Merkmalen vor. Weiterbildungen der Erfindung sind Gegenstand von Unteransprüchen.

Die von der Erfindung vorgeschlagene Mischerkartusche enthält also eine Scheibensteuerung, die mithilfe eines Betätigungselements betätigt werden kann. Mit dem Betätigungselement kann die Scheibensteuerung von einer geschlossenen Position, in der kein Wasser aus dem Wasserauslass aus der Kartusche austritt, geöffnet werden, wobei zunächst nur die Durchtrittsöffnung für kaltes Wasser geöffnet wird. Dieser Übergang geht mehr oder weniger kontinuierlich. Bei einer weiteren Bewegung in der gleichen Richtung wird nun zusätzlich zu der Öffnung für kaltes Wasser auch die Öffnung für warmes Wasser geöffnet und gleichzeitig die Öffnung für kaltes Wasser wieder geschlossen. Im gleichen Maße, in dem die Öffnung für das warme Wasser geöffnet wird, wird die Öffnung für kaltes Wasser wieder geschlossen. Am Ende dieses Übergangsbereich ist dann nur noch die Öffnung für das warme Wasser vollständig geöffnet.

Die Bewegung des Betätigungselements ist üblicherweise bei Scheibensteuerungen eine Verdrehung. Beide Endpositionen sind dadurch bestimmt, dass das Betätigungselement jeweils an einem gehäusefesten Anschlag anliegt.

Wird nun das erfindungsgemäß vorgesehene zusätzliche Anschlagelement nicht an dem Kartuschengehäuse angebracht, so ist die Mischerkartusche in der Weise zu bedienen, wie dies eingangs geschildert wurde, nämlich zum Einschalten und zur Änderung der Temperatur.

Durch die Anbringungsmöglichkeit besteht nun aber die Möglichkeit, das abnehmbare Anschlagelement anzubringen, um dadurch die Bewegbarkeit des Betätigungselements und damit die Verstellmöglichkeit der Mischerkartusche einzuschränken. Dies geschieht ohne einen Eingriff im Inneren der Kartusche, das heißt ohne Änderung oder Austausch der Scheiben der Scheibensteuerung. Man hat dadurch eine Mischerkartusche geschaffen, die durch einen einfachen von außen her ohne Öffnung des Kartuschengehäuses durchzuführenden Eingriff auf eine unterschiedliche Weise verwendet werden kann bzw. eine andere Charakteristik erhält.

Insbesondere kann die Anbringungsmöglichkeit für das abnehmbare Anschlagelement so ausgestaltet sein, dass dieses die Bewegung des Betätigungselements in Richtung auf die geschlossene Stellung begrenzt. Die Begrenzung kann in Weiterbildung so ausgestaltet sein, dass die geschlossene Stellung der Scheibensteuerung mithilfe des Betätigungselements nicht erreicht werden kann. Dann handelt es sich bei der Mischerkartusche um eine reine Temperatursteuerung.

Es ist aber ebenfalls möglich und wird von der Erfindung vorgeschlagen, dass die Anbringungsmöglichkeit derart ausgebildet ist, dass das abnehmbare Anschlagelement die Bewegung des Betätigungselements in Richtung auf die Öffnungsstellung für warmes Wasser begrenzt. Hier kann sowohl eine teilweise als auch eine vollständige Sperrung der Position der Scheibensteuerung vorgesehen sein, in der die Öffnung für kaltes Wasser mit dem Auslass aus der Ventilkartusche verbunden ist.

Bei einer nur teilweisen Begrenzung dieser Endpositionen des Bewegungsweges des Betätigungselements kann eine Art Temperaturbegrenzung bzw. eine Sparstellung verwirklicht werden, in der die Menge des warmen Wassers und damit die Menge der zur Herstellung des warmen Wassers erforderlichen Energie begrenzt wird.

Insbesondere kann vorgesehen sein, dass das abnehmbare Anschlagelement sowohl auf der einen als auf der anderen Seite des Bewegungsweges des Betätigungselements in mehreren Winkelpositionen angebracht werden kann, um beispielsweise auch die teilweise oder vollständige Sperrung einer Endposition zu verwirklichen.

Eine besonders sinnvolle und von der Erfindung bevorzugte Art der Anbringung des Anschlagelements kann darin bestehen, dass das Anschlagelement auf das Gehäuse der Ventilkartusche aufgesteckt wird, insbesondere in Axialrichtung. Dies kann teilweise auch ohne Entnahme der Ventilkartusche aus der Sanitärarmatur erfolgen.

Das Betätigungselement einer solchen Ventilkartusche ist üblicherweise eine Welle, die aus der Oberseite der Ventilkartusche herausragt. Zur Begrenzung der Drehbewegung kann diese Welle ein Querelement, insbesondere einen Querbolzen aufweisen, der mit den gehäusefesten Anschlägen und auch mit dem abnehmbaren Anschlagelement zusammenwirkt.

Erfindungsgemäß kann vorgesehen sein, dass mindestens ein Anschlag, insbesondere das abnehmbare Anschlagelement, an die Querschnittsform des Querbolzens angepasst ist, um die auftretenden Kräfte besser auffangen zu können.

In nochmaliger Weiterbildung kann vorgesehen sein, dass das Kartuschengehäuse ein Gehäuseoberteil mit einer Deckfläche aufweist, die nur teilweise ausgebildet ist, beispielsweise die Form eines Kreissektors aufweist. Die Endbereiche, die radial verlaufen, können dabei den beidseits vorhandenen gehäusefesten Anschlag bilden.

In nochmaliger Weiterbildung der Erfindung kann vorgesehen sein, dass die Mantelfläche des Gehäuseoberteils mit einer Verzahnung versehen ist, die zur Festlegung des abnehmbaren Anschlagelements ausgebildet ist.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
- Figur 1: eine teilweise geschnittene Seitenansicht einer Mischerkartusche nach der Erfindung;
- Figur 2: eine Draufsicht auf die Mischerkartusche der Figur 1;
- Figur 3: eine perspektivische Ansicht der Ventilkartusche;
- Figur 4: die Draufsicht auf die Scheibensteuerung in der Kaltwasserstellung;
- Figur 5: die Draufsicht auf die Scheibensteuerung in der Warmwasserstellung;
- Figur 6: die perspektivische Ansicht der Ventilkartusche ohne den Zusatzanschlag;
- Figur 7: eine der Figur 2 entsprechende Darstellung auf die Ventilkartusche der Figur 6;
- Figur 8: die Draufsicht auf die Scheibensteuerung in der vollständig geschlossenen Position;
- Figur 9: die Draufsicht auf die Scheibensteuerung in der Kaltwasserstellung bei der Ausführungsform nach Figur 6;
- Figur 10: die Draufsicht auf die Scheibensteuerung in der Warmwasserstellung bei der Ausführungsform nach Figur 6.

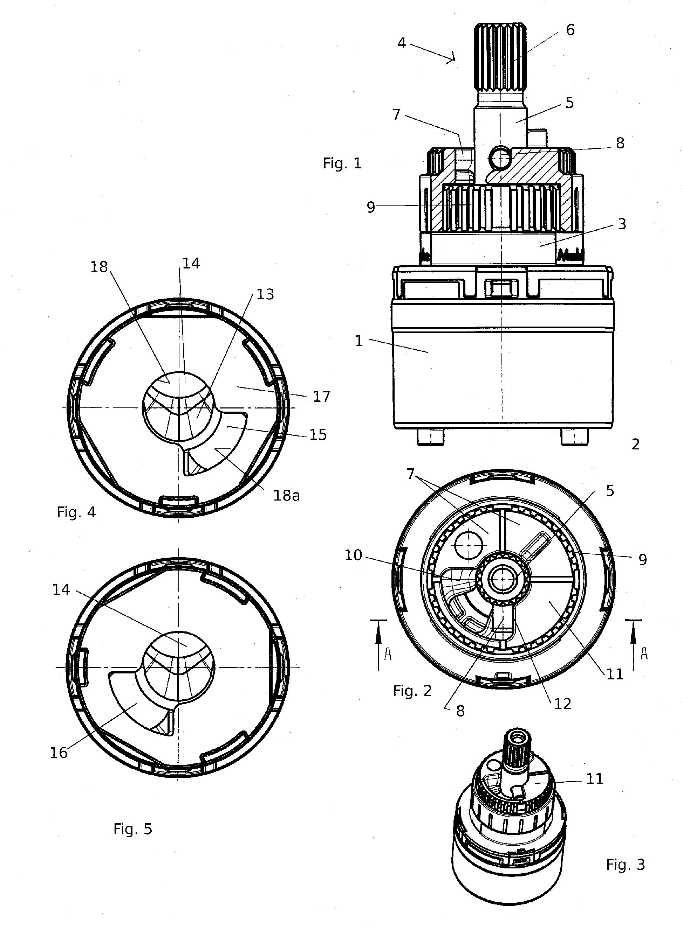

Die Figur 1 zeigt die Ventilkartusche nach der Erfindung in einer teilweise geschnittenen Seitenansicht. Die Ventilkartusche enthält ein Kartuschengehäuse 1, das im Wesentlichen zylindrisch ausgebildet ist. Die Unterseite 2 des Kartuschengehäuses 1 dient zur Verbindung mit Wasserführungen in der Sanitärarmatur. Aus dem zylindrischen Teil des Kartuschengehäuses 1 ragt ein Gehäuseoberteil 3 heraus, das im Durchmesser kleiner ist als der zylindrische Teil des Kartuschengehäuses 1. Zur Bedienung der in dem Kartuschengehäuse 1 angeordneten Scheibensteuerung dient ein Betätigungselement 4, das die Form einer um eine Achse verdrehbaren Welle 5 aufweist. Zur drehfesten Verbindung mit einem Drehgriff ist das obere Ende der Welle 5 mit einer Längsverzahnung 6 versehen.

In der Welle 5 ist etwa in der Höhe der oberen Stirnwand 7 des Gehäuseoberteils 3 ein Querbolzen 8 eingesetzt, der einen kreisrunden Querschnitt aufweist. In der Darstellung der Figur 1 verläuft der Querbolzen 8 senkrecht zur Zeichnungsebene.

Das Gehäuseoberteil 3 weist über einen Teil seiner von der oberen Stirnwand 7 ausgehenden Axialerstreckung eine Längsverzahnung 9 auf, die in Figur 1 zum Teil in Seitenansicht zu sehen ist. Diese Längsverzahnung 9 ergibt sich aus der Figur 2 ebenfalls, die eine Draufsicht auf die Ventilkartusche der Figur 1 darstellt. Hier ist ebenfalls die bereits erwähnte obere Stirnwand 7 zu sehen, die sich über etwa die Hälfte der Oberseite des Gehäuseoberteils 3 erstreckt. Sie bildet eine Kante 10, die angenähert radial verläuft. Die zweite Kante auf der diametral gegenüberliegenden Seite ist in der Darstellung der Figur 2 von einem Anschlagelement 11 abgedeckt, das seinerseits eine radial verlaufende Kante 12 aufweist. Diese Kante 12 liegt in Höhe des Querbolzens 8 und bildet dadurch einen Anschlag für diesen Querbolzen 8.

Wie man der Figur 2 entnehmen kann, kann das Betätigungselement 4, nämlich die Welle 5, verdreht werden in einem Bereich, der von den Kanten 10 und 12 begrenzt wird. Diese Kanten bilden Anschlagkanten zur Begrenzung der Drehbewegung des Betätigungselements, dessen Verdrehung in eine Verdrehung einer Steuerscheibe der Scheibensteuerung umgesetzt wird. Die beiden Kanten 10, 12 liegen etwas seitlich gegenüber einer durch den Mittelpunkt bzw. die Drehachse des Betätigungselements 4 verlaufenden radialen Linie, so dass bei Anlage des Querbolzens 8 an der jeweiligen Kante 10, 12 die Achse des Querbolzens 8 dieser radialen Linie folgt. Dadurch liegt der Querbolzen 8 längs seiner gesamten Seitenlinie an der jeweiligen Kante 10, 12 an.

Nochmals zurück zu der Figur 1, in der das Anliegen des Querbolzens 8 an der Seitenkante 12 des Anschlagelements 11 dargestellt ist. Die den Querbolzen 8 zugewandte Begrenzungsfläche ist natürlich keine Kante, sondern eine Fläche, die der Querschnittsform des Querbolzens 8 angepasst ist. Dadurch liegt der Querbolzen tatsächlich nicht nur in seiner eigenen Längsrichtung, sondern auch über seinen Umfang an einer großen Fläche haben.

Die Position, die das Betätigungselement 4 in der Darstellung der Figur 1 und Figur 2 einnimmt, ist auch in der perspektivischen Übersicht Darstellung der Figur 3 vorhanden.

Die Wirkungsweise des durch die Ventilkartusche dargestellten Ventils wird nun unter Bezugnahme auf die Figuren 4 und 5 erläutert. Die Figuren 4 und 5 zeigen schematisch eine Draufsicht auf die eigentliche in dem Kartuschengehäuse 1 angeordnete Scheibensteuerung. Diese Scheibensteuerung enthält eine unterhalb der Zeichnungsebene vorhandene feststehende Verteilerscheibe 13 mit einer Auslassöffnung 14 und zwei Einlassöffnungen, 15 für kaltes Wasser und 16 für warmes Wasser. Auf dieser feststehenden Verteilerscheibe 13 liegt die verdrehbare Steuerscheibe 17, die mithilfe des Betätigungselements 4 verdreht wird. Die verdrehbare Steuerscheibe 17 besitzt eine Durchbrechung 18 mit einem seitlich angeordneten bogenschlitzartig geformten Durchbrechungsvorsprung 18a. In Figur 4 ist der seitliche bogenschlitzartig geformte Vorsprung 18a dieser Durchbrechung so orientiert, dass er sich mit der Einlassöffnung 15 für kaltes Wasser deckt.

Wird die bewegbare Steuerscheibe 17 mithilfe des Betätigungselements im Uhrzeigersinn verdreht, so beginnt der Vorsprung 18a sich mit der Einlassöffnung 16 für warmes Wasser zu überdecken, wobei gleichzeitig die Überdeckung mit der Einlassöffnung 15 für kaltes Wasser abnimmt. Gegen Ende der Bewegung im Uhrzeigersinn ist die Steuerscheibe 17 in der in Figur 5 dargestellten Position angelangt, in der der Vorsprung 18a sich nur noch mit der Einlassöffnung 16 für warmes Wasser überdeckt. Einer Weiterdrehung wird dadurch verhindert, dass der Querbolzen 8 jetzt an der Kante 10 der oberen Stirnwand 7 bzw. zu dieser Kante 10 gehörenden Anschlagfläche anliegt.

Durch das abnehmbare Anschlagelement 11 verhält sich das Ventil der Ausführungsform nach Figur 1 bis Figur 5 als ein Mischventil.

Das abnehmbare Anschlagelement 11 lässt sich nach oben in Figur 1 herausnehmen, sofern man das Betätigungselement so weit verdreht, dass der Querbolzen 8 das Anschlagelement 11 freigibt.

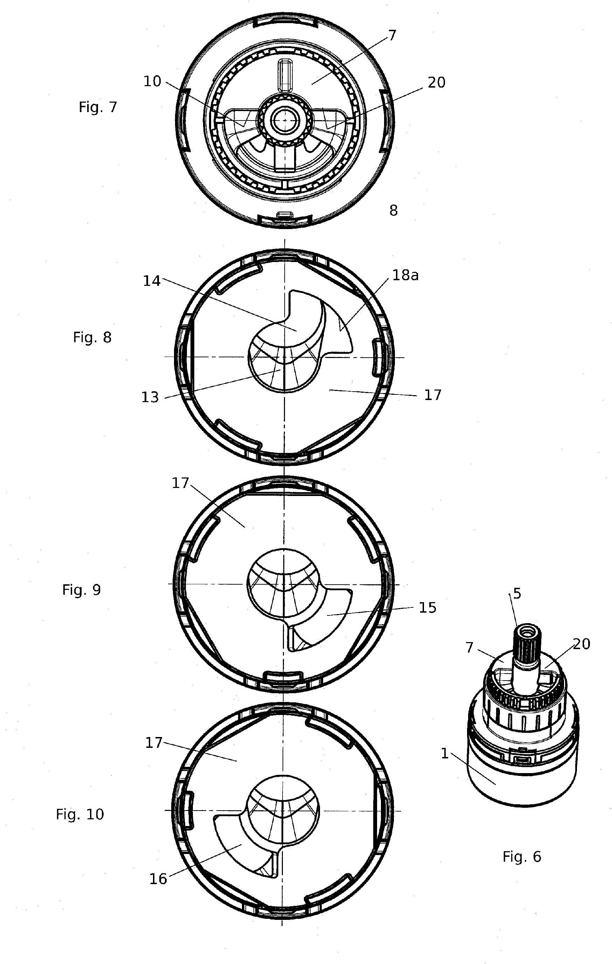

Wenn man das Anschlagelement 11 entnommen hat, entsteht ein Ventil, wie es in den folgenden Figuren dargestellt ist, beginnend mit Figur 6, die der Darstellung der Figur 3 entspricht. Man sieht jetzt die bereits erwähnte etwa diametral zu der Kante 10 verlaufende zweite Kante 20. In der Position, die in Figur 6 dargestellt ist, liegt der Querbolzen 8 an dieser zweiten Kante 20 an.

Die der Figur 2 entsprechende Figur 7 zeigt dies noch mal, nämlich die beiden angenähert diametral und radial verlaufenden Kanten 10 und 20, die auch hier, aus den genannten Gründen, etwas seitlich gegenüber einem Durchmesser versetzt sind. Der Querbolzen 8 ist mithilfe des Betätigungselements 4 in eine mittlere Stellung verdreht. In der folgenden Diskussion wird von der Position des Betätigungselements 4 in der Darstellung der Figur 6 ausgegangen, nämlich der Anlage des Querbolzens 8 an der zweiten Begrenzungskante 20 der Stirnfläche 7. Die zugehörige Position der bewegbaren Steuerscheibe 17 ist in Figur 8 dargestellt. Die Durchbrechung 18 mit ihrem Vorsprung 18 a überdeckt sich nur noch mit der Auslassöffnung 14 der Verteilerscheibe 13, so dass nur die Auslassöffnung 14 geöffnet ist, beide Einlassöffnungen 15, 16 aber verschlossen.

Wird nun die Steuerscheibe 17 mithilfe des Betätigungselements im Uhrzeigersinn verdreht, so wird zunächst allmählich die Einlassöffnung für kaltes Wasser geöffnet, bis diese vollständig geöffnet ist, siehe Figur 9. Die Figur 9 entspricht der Figur 4 bei der vorhergehenden Ausführungsform. Bei einem Weiterdrehen des Betätigungselements in der gleichen Richtung treten und die gleichen Vorgänge auf, wie sie unter Bezugnahme auf die Figuren 4 und 5 beschrieben wurden. In diesem Bereich verhält sich also das Ventil genauso wie das Ventil der vorhergehenden Ausführungsform.

Man hat auf diese Weise ein Ventil geschaffen, das zum Öffnen des kalten Wassers und zum anschließenden Mischen dient. Diese Änderung der Charakteristik geschieht nur durch Entnahme des abnehmbaren Anschlagelements 11.

Es ist auch möglich, das abnehmbare Anschlagelement 11 in der Darstellung der Figur 2 nicht rechts anzubringen, so dass das Verdrehen der Scheibensteuerung in Richtung auf die geschlossene Position verhindert wird, sondern auch links vor der der Warmwasserstellung zugeordneten Anschlagskante 10. In diesem Fall würde die Bewegung der verdrehbaren Steuerscheibe 17 zwischen der Position der Figur 8 und der Position der Figur 9 stattfinden können. Dies stellt damit dann ein einfaches Mengensteuerventil für kaltes Wasser dar.

Wenn man die Umfangserstreckung des Anschlagelements 11 verkleinert und es vor der der Warmwasserstellung zugeordneten Kante 10 anordnet, kann man damit auch ein Ventil bilden, bei dem in der Endstellung die Einlassöffnung 16 für warmes Wasser nur teilweise geöffnet und die Einlassöffnung 15 für kaltes Wasser nur teilweise geschlossen ist.

## Patentansprüche

1. Mischerkartusche für eine Sanitärarmatur, mit
1.1 einem Kartuschengehäuse (1),
1.2 einer in dem Kartuschengehäuse (1) angeordneten Scheibensteuerung,
1.3 je einem Einlass (16, 15) für warmes Wasser und für kaltes Wasser in das Kartuschengehäuse (1),
1.4 einem Auslass für Mischwasser aus dem Kartuschengehäuse (1), sowie mit
1.5 einem Betätigungselement (4), das
1.6 die Scheibensteuerung von einer geschlossenen Stellung über eine Öffnungsstellung nur für Kaltwasser, eine Öffnungsstellung für kaltes und warmes Wasser bis in eine Öffnungsstellung nur für warmes Wasser steuert, wobei
1.7 beide Endpositionen durch je einen gehäusefesten Anschlag bestimmt sind, sowie mit
1.8 einer Anbringungsmöglichkeit für ein abnehmbares Anschlagelement (11), das
1.9 die Bewegung des Betätigungselements (4) einseitig begrenzt.

2. Mischerkartusche nach Anspruch 1, bei der die Anbringungsmöglichkeit derart ausgebildet ist, dass das abnehmbare Anschlagelement (11) die Bewegung des Betätigungselements (4) in Richtung auf die geschlossene Stellung begrenzt, diese gegebenenfalls verhindert.

3. Mischerkartusche nach Anspruch 1 oder 2, bei der die Anbringungsmöglichkeit derart ausgebildet ist, dass das abnehmbare Anschlagelement (11) die Bewegung des Betätigungselements (4) in Richtung auf die Öffnungsstellung für warmes Wasser begrenzt.

4. Mischerkartusche nach einem der vorhergehenden Ansprüche, bei der das abnehmbare Anschlagelement (11) in mehreren Winkelpositionen anbringbar ist.

5. Mischerkartusche nach einem der vorhergehenden Ansprüche, bei der das abnehmbare Anschlagelement (11) steckbar ist, insbesondere in Axialrichtung des Kartuschengehäuses (1).

6. Mischerkartusche nach einem der vorhergehenden Ansprüche, mit einem an dem Betätigungselement (4) angeordneten Querbolzen (8) als an dem Anschlag zur Anlage gelangendes bewegbares Element.

7. Mischerkartusche nach Anspruch 6, bei der mindestens ein Anschlag, insbesondere das abnehmbare Anschlagelement (11), an die Querschnittsform des Querbolzens (8) angepasst ist.

8. Mischerkartusche nach einem der vorhergehenden Ansprüche, bei der eine nur teilweise ausgebildete Deckfläche (7) eines Gehäuseoberteils mit ihren etwa radial verlaufenden Endbereichen den gehäusefesten Anschlag bildet.

9. Mischerkartusche nach einem der vorhergehenden Ansprüche, bei der die Mantelfläche des Gehäuseoberteils mit einer Verzahnung (9) versehen ist, die zur Festlegung des abnehmbaren Anschlagelements (11) ausgebildet ist.
